# EUROPÄISCHE PATENTSCHRIFT

(11) **EP 3 887 133 B1**
(45) Veröffentlichungstag und Bekanntmachung des Hinweises auf die Patenterteilung: **25.01.2023**
(21) Anmeldenummer: 19809815.4
(22) Anmeldetag: 26.11.2019
(51) Int. Cl.: B29C 70/34, B29C 70/44, B29D 99/00, B29L 31/08, F03D 1/06

(54) **ROTORBLATT MIT GURTEN MIT VERFORMBAREN PULTRUDATEN**
ROTOR BLADE WITH BELTS COMPRISING PULTRUDED PRODUCTS
PALE DE ROTOR À COURROIES POURVUES D'ÉLÉMENTS PULTRUDÉS DÉFORMABLES

(30) Priorität: 28.11.2018 DE 102018009332
(43) Veröffentlichungstag der Anmeldung: 06.10.2021
(73) Patentinhaber: Siemens Gamesa Renewable Energy Service GmbH, 20097 Hamburg (DE)
(72) Erfinder: SCHIRNER, Robert, 24768 Rendsburg (DE)
(74) Vertreter: Groth, Wieland
(86) Internationale Anmeldenummer: PCT/EP2019/082584
(87) Internationale Veröffentlichungsnummer: WO 2020/109302

(56) Entgegenhaltungen:
- DE-A1-102016 009 640
- US-A1- 2014 301 859

## Beschreibung

Die Erfindung betrifft ein Herstellungsverfahren für ein Bauteil eines Rotorblattes. Die Erfindung betrifft auch eine Anordnung zur Herstellung eines Bauteils eines Rotorblattes. Herstellungsverfahren für Bauteile von Rotorblättern sind im Stand der Technik natürlich hinlänglich bekannt. Üblicherweise werden Rotorblätter aus mehreren Bauteilen zusammengebaut. Rotorblätter weisen beispielsweise zwei Rotorblatthalbschalen auf, entlang jeder der Rotorblatthalbschalen verläuft in Längsrichtung jeweils ein Gurt. Die Gurte sind im Innenraum des Rotorblattes sich gegenüberliegend angeordnet und mit einem Steg verbunden. Die Rotorblatthalbschalen sind an ihren Rändern miteinander verklebt. Daneben gibt es auch andere Bauarten von Rotorblättern.

Aus der DE 10 2016 009 640 A1 ist ein Gurt mit wenigstens zwei Pultrudat- oder Rodpacklagen bekannt, wobei zwischen den Rodpack-, bzw. Pultrudatlagen Gewebelagen vorgesehen sind, die an einem tippseitigen Ende die Pultrudat-, bzw. Rodpacklagen verlängern.

In der US 2014/0301859 A1 ist ein Rotorblatt einer Windkraftanlage offenbart, in dem Pultrudate verwendet werden, sowie ein Herstellungsverfahren und Anordnung gemäß dem Oberbegriff des Anspruchs 1 bzw 7.

Die Gurte können als Bauteile der Rotorblätter vorab in separaten Herstellungsformen hergestellt werden. Die Gurte werden in bekannter Weise aus Pultrudaten hergestellt. Pultrudate sind endlose Strangziehbänder, die in Längsrichtung verlaufende Glasfaser- und/oder Kohlefaserrovinge aufweisen. Die Rovinge sind durch ein ausgehärtetes Harzsystem miteinander fest verbunden. Die Gurte werden aus einer Mehrzahl an Pultrudaten hergestellt. Dazu werden die Pultrudate nebeneinander und übereinander in die Herstellungsform für den Gurt gelegt. Die Pultrudate sind sowohl im Querschnitt als auch im Längsschnitt relativ starr, d. h. sie sind nicht biegsam oder nur schwer biegsam. Das führt zu dem Problem, dass die nebeneinander auf eine gekrümmte Auflagefläche der Herstellungsform gelegten Pultrudate nicht vollflächig auf der Auflagefläche aufliegen, sondern nur an ihren Rändern auf der konkav gekrümmten Auflagefläche aufliegen.

Die nebenaneinandergelegten Pultrudate werden anschließend mit einer Vakuumfolie überzogen, die an den Rändern der Herstellungsform abgedichtet wird. Es wird dann zwischen der Auflagefläche und der Vakuumfolie ein Vakuum erzeugt, das die Vakuumfolie an die Auflagefläche heransaugt und dabei eine Kraft auf die Pultrudate ausübt, so dass diese etwas zur Auflagefläche hin gebogen werden.

Es hat sich jedoch herausgestellt, dass der auf die Pultrudate wirkende Atmosphärendruck nicht ausreicht, die Pultrudate selbst bei Vakuum vollflächig auf die Auflagefläche der Herstellungsform anzudrücken. Vielmehr bleiben leere Räume zwischen der Auflagefläche und der Unterseite der Pultrudate bestehen. Während des sich anschließenden Harzinfusionsverfahrens werden diese leeren Räume mit Harz gefüllt, und in dem sich anschließendem Aushärteverfahren härtet das Harz in den Räumen aus. Zwar sind die Gurte durch das ausgehärtete Harz fest und die Pultrudate fest miteinander verklebt, jedoch weisen die Räume, die mit Harz gefüllt sind, eine deutlich geringere Zugfestigkeit auf als die Räume, die mit Pultrudaten gefüllt sind, insbesondere da die mit Harz gefüllten Räume keine in Längsrichtung verlaufenden Fasern umfassen.

Des Weiteren hat es sich herausgestellt, dass bei einigen Infusionsverfahren, die durch das Vakuum auf die unbiegsamen Pultrudate ausgeübte Kraft nicht ausreicht, die Pultrudate gegen die Auflagefläche zu drücken, denn die Pultrudate weisen eine nicht hinreichende Biegsamkeit auf, um gegen die Auflagefläche gedrückt zu werden. Nachteiligerweise können die Pultrudate aber, bevor sie die Auflagefläche vollflächig berühren, brechen.

Sowohl das Brechen der Pultrudate als auch das Entstehen von harzgefüllten Räumen ist natürlich nachteilig für die Festigkeit des Gurtes.

Es ist daher in einem ersten Aspekt Aufgabe der Erfindung, ein eingangs genanntes Herstellungsverfahren weiterzuentwickeln, so dass die oben genannten Nachteile verringert werden, vorzugsweise überhaupt nicht mehr auftreten.

Es ist in einem zweiten Aspekt Aufgabe der vorliegenden Erfindung, eine eingangs genannte Anordnung zur Herstellung eines Bauteils eines Rotorblattes weiterzuentwickeln, so dass die oben genannten Nachteile verringert werden, vorzugsweise überhaupt nicht mehr auftreten.

In ihrem ersten Aspekt wird die Aufgabe durch ein eingangs genanntes Herstellungsverfahren mit den Merkmalen des Anspruchs 1 gelöst.

Erfindungsgemäß wird eine Herstellungsform mit gekrümmter Auflagefläche zur Verfügung gestellt. Erfindungsgemäß wird wenigstens ein Pultrudat auf die Auflagefläche gelegt, wobei das wenigstens eine Pultrudat mit einer Vakuumfolie überdeckt wird und beim Auflegen auf die gekrümmte Auflagefläche nicht vollständig ausgehärtet und daher biegsam ist und ein Vakuum erzeugt wird und das wenigstens eine biegsame Pultrudat durch das Vakuum an die gekrümmte Auflagefläche der Herstellungsform vollflächig angedrückt wird.

Erfindungswesentlich ist, dass das wenigstens eine Pultrudat beim Auflegen auf die gekrümmte Auflagefläche nicht vollständig ausgehärtet ist und daher nicht unbiegsam ist, sondern biegsam ist, und zwar derart biegsam ist, dass es ohne zu brechen vollflächig auf die gekrümmte Auflagefläche aufgedrückt werden kann. Es ist weiterhin so biegsam, dass der Atmosphärendruck hinreichend ist, um das Pultrudat überall vollflächig auf die gekrümmte Auflagefläche aufzudrücken, wenn der Raum zwischen dem Pultrudat und der Auflagefläche mit einem Infusionsvakuum gefüllt ist.

Üblicherweise werden Pultrudate in einem Strangziehverfahren hergestellt. Dazu werden Fasern nebeneinander auf auf Spulen angeordneten Rovingen aufgefächert und einzeln oder in kleineren Bündeln durch ein Harzbad geführt. Eine Harzmatrix wird vorgeformt, und die Harzmatrix wird erhitzt und dadurch ausgehärtet. Je nach Dauer und Höhe der Temperatur vernetzt das Harzsystem weniger stark oder stärker und wird dadurch fester. Bekannterweise werden die Pultrudate mit einem vollständig ausgehärteten Harzsystem zur Verfügung gestellt.

Pultrudate werden als Rollenwaren zur Verfügung gestellt und als lange Abschnitte von 30 m, 40 m oder noch länger abgeschnitten. Sie weisen Breiten von etwa 100 mm bis 3.000 mm auf und Dicken von 5 mm bis 20 mm. Es sind aber natürlich auch andere Maße realisierbar. Die langen Pultrudate sind in Querrichtung senkrecht zur Längsrichtung gerade, vorzugsweise sind sie in jedem Querschnitt gerade. Insbesondere im Querschnitt lassen sich die Pultrudate nur schwer an die gekrümmte Auflagefläche drücken.

Aus der DE 10 2008 006 588 B4 ist bekannt, dass duroplastisch vernetzte Kunststoffe, das sind zum Beispiel die hier genannten Harzsysteme in einem teilvernetzten, gelierten und unschmelzbaren Zustand zur Verfügung gestellt werden. Es ist des Weiteren bekannt, dass diese unbiegsamen und festen Ausgangsprodukte an eine Endform, also beispielsweise an die gekrümmte Form der Auflagefläche angepasst werden können, indem sie oberhalb einer Glasübergangstemperatur Tg erhitzt werden und dadurch von dem festen in einen elastischen, gummiartigen Zustand übergehen, der es gestattet, das duroplastische Ausgangsprodukt in eine andere, etwa gekrümmte, äußere Form umzuformen. Durch späteres Abkühlen unter die Glasübergangstemperatur Tg wird die Umformung erhalten. Anschließend wird der Kunststoff nachträglich durch Vernetzung vollständig ausgehärtet. Je nach Vernetzungsgrad liegt die Glasübergangstemperatur Tg zwischen -50 °C und +140 °C, bei Vernetzungsgraden von über 70 % bei oberhalb von 40 °C.

Erfindungsgemäß wird das Pultrudat jedoch nicht auf eine Temperatur oberhalb der Glasübergangstemperatur Tg erhitzt, sondern auf eine tiefere Temperatur unterhalb der Glasübergangstemperatur Tg. Es braucht auch gar nicht zusätzlich erhitzt zu werden und kann eine Umgebungstemperatur haben. Es wird dann auf die gekrümmte Auflagefläche gelegt. Weil die Pultrudate hinreichend weich sind, können sie sich, ohne noch einmal erwärmt werden zu müssen, unter geringfügigem Druck des Vakuuminfusionsverfahrens an die gekrümmte Auflagefläche anschmiegen.

Es ist daher vorzugsweise vorgesehen, das Pultrudat nicht zusätzlich zu erhitzen, sondern auf einer Temperatur zu belassen, die unterhalb der Glasübergangstemperatur Tg liegt und bei dieser Temperatur ein Vakuum zwischen Vakuumfolie und Auflagefläche zu erzeugen und das biegsame Pultrudat auf die Auflagefläche zu ziehen.

In einer bevorzugten Weiterbildung der Erfindung wird das mit Harz infundierte weiche Pultrudat dann in einem üblichen Aushärteverfahren zusammen mit dem Harz, das die Pultrudate umgibt, ausgehärtet. Dazu wird das Pultrudat für eine vorgegebene Zeit dauererhitzt.

Günstigerweise wird das wenigstens eine Pultrudat in einer Gurtherstellungsform entlang eines Querschnitts und entlang eines Längsschnittes gekrümmt. Üblicherweise bestehen Gurte aus etwa drei bis fünf nebeneinanderliegenden Pultrudaten und bis zu zehn übereinander angeordneten Pultrudatlagen. Jedes Pultrudat wird bei der Gurtherstellung quer und längs gekrümmt. Somit wird auch der Gurt, der aus einer Mehrzahl an Pultrudaten aufgebaut ist entlang eines Querschnitts und entlang eines Längsschnittes gekrümmt, und auch der Gurt liegt vollflächig auf der Auflagefläche der Gurtherstellungsform auf. Weil der Gurt die Krümmung im Querschnitt und Längsschnitt optimal aufnimmt, kann er passgenau auf die Rotorblatthalbschale aufgelegt werden.

Es ist grundsätzlich denkbar, dass der Gurt nach dem Infusionsverfahren nicht vollständig ausgehärtet ist, sondern ähnlich wie die Pultrudate, die zu seiner Herstellung dienen, nur soweit ausgehärtet wird, dass er seine Form zum Transport beibehält, aber dennoch weich bleibt und in diesem Zustand in die Rotorblatthalbschale eingelegt werden kann. Der Lagenstapel, der zur Ausbildung der Rotorblatthalbschalen dient, sowie der auf den Lagenstapel aufgelegte, noch nicht ausgehärtete Gurt werden dann in einem separaten Infusionsverfahren mit Harz infundiert und zusammenlaminiert und in einem abschließenden Erhitzungsschritt auf eine so hohe Temperatur erhitzt und solange erhitzt, bis das gesamte Harzsystem sowohl in den Pultrudaten als auch im Gurt als auch das Harzsystem zwischen dem Gurt und der Rotorblatthalbschale vollständig ausgehärtet ist.

Die Aufgabe wird im zweiten Aspekt durch eine eingangs genannte Anordnung mit den Merkmalen des Anspruchs 7 erfüllt.

Die erfindungsgemäße Anordnung zur Herstellung eines Rotorblattes umfasst eine Herstellungsform mit einer gekrümmten Auflagefläche mit wenigstens einem vollflächig auf der Auflagefläche liegenden biegsamen Pultrudat, das nicht vollständig ausgehärtet ist und eine Glasübergangstemperatur aufweist und sich auf einer Temperatur unterhalb der Glasübergangstemperatur befindet.

Die Anordnung umfasst und dient zur Herstellung eines Bauteils eines Rotorblattes. Sie umfasst eine Herstellungsform mit einer gekrümmten Auflagefläche und wenigstens ein auf der gekrümmten Auflagefläche liegendes, nicht ausgehärtetes Pultrudat. Das Pultrudat ist, wie oben beschrieben, nur so weit ausgehärtet, dass es unter normalem Luftdruck vollflächig auf die gekrümmte Auflagefläche drückbar ist.

Das Pultrudat besitzt eine Glasübergangstemperatur Tg. Es ist aber nicht auf eine Temperatur oberhalb der Glasübergangstemperatur Tg erhitzt. Vielmehr ist das wenigstens eine Pultrudat, nachdem es zur Verfügung gestellt ist und auf die Auflagefläche der Herstellungsform aufgelegt ist und auch während das Vakuum ausgebildet ist, nicht auf eine Temperatur oberhalb der Glasübergangstemperatur Tg erhitzt.

Vorzugsweise umfasst die Anordnung eine über das wenigstens eine nicht ausgehärtete Pultrudat gezogene Vakuumfolie, und das wenigstens eine Pultrudat liegt vollflächig auf der Auflagefläche auf. Diese Anordnung ist eine Anordnung, die sich während der Herstellung eines Gurtes eines Rotorblattes ergibt. Dabei befindet sich das Pultrudat auf einer Temperatur, die unterhalb der Glasübergangstemperatur Tg liegt, und es ist nicht ausgehärtet.

Die Erfindung wird anhand eines Ausführungsbeispiels in drei Figuren beschrieben, dabei zeigen:
- Fig.1: eine Querschnittansicht eines auf eine gekrümmte Auflagefläche einer Herstellungsform gelegtes flaches Pultrudat,
- Fig.2: eine Querschnittansicht eines an die gekrümmte Oberfläche der Herstellungsform angesaugtes Pultrudat,
- Fig.3: einen Längsschnitt eines auf die gekrümmte Oberfläche gelegten Pultrudats vor dem Ansaugen.

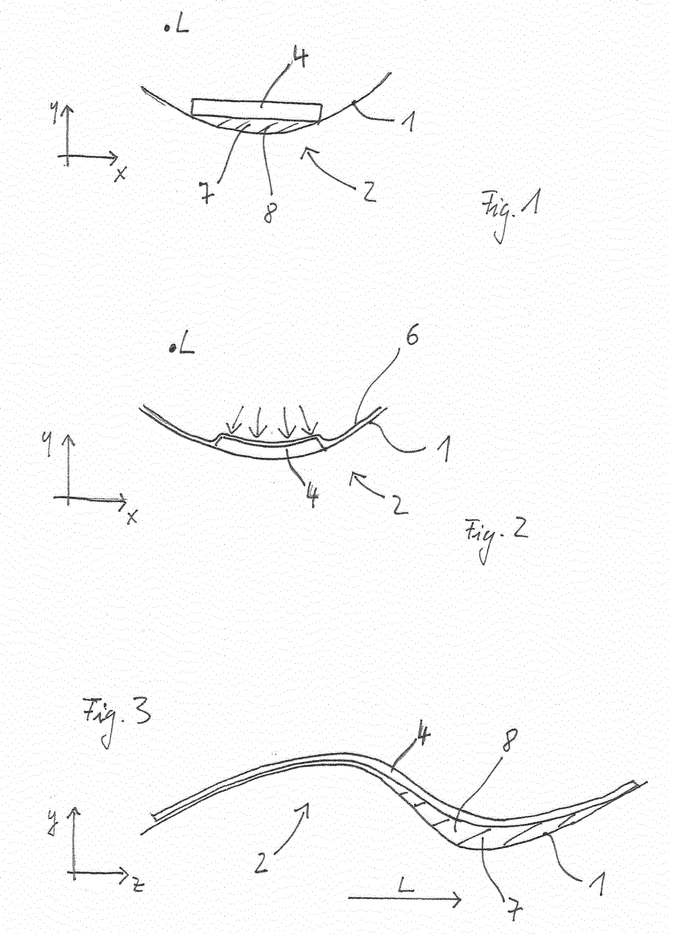

In Fig. 1 ist eine gekrümmte Auflagefläche 1 einer Herstellungsform 2 für einen Gurt eines Rotorblattes in einem Querschnitt senkrecht zu einer Längsrichtung L dargestellt.

Die erfindungsgemäßen Gurte weisen eine Mehrzahl an Pultrudaten 4 auf, die in Längsrichtung nebeneinander und übereinander angeordnet sein können. In Fig. 1 ist der Querschnitt eines Pultrudates 4 zur Herstellung des Gurtes dargestellt. Ein Gurtquerschnitt würde eine Mehrzahl an Pultrudaten 4 umfassen, beispielsweise drei bis fünf nebeneinander- und bis zu zehn übereinandergelegte Pultrudate 4.

Die in Fig. 1 dargestellte Herstellungsform 2 dient zur separaten Herstellung von Gurten. Die Gurte werden separat als Bauteile eines Rotorblattes fertiggestellt und dann als fertiges Bauteil auf eine Innenwandung einer Rotorblatthalbschale aufgelegt. Die Rotorblatthalbschale ist noch nicht als fertiges Bauteil laminiert, sondern umfasst zu dem Zeitpunkt, zu dem der fertige Gurt aufgelegt wird, einen Stapel an Gewebe- und Gelegelagen unter Einbeziehung von Sandwichkernmaterialien, Balsaholz oder Ähnlichem. Auf den Lagenstapel wird der laminierte Gurt aufgelegt und in einem anschließenden Laminierverfahren in die Rotorblatthalbschale miteinlaminiert.

Da die Rotorblattschale sowohl im Querschnitt als auch im Längsschnitt entlang der Auflagefläche des Pultrudates 4 gekrümmt ist, muss das Pultrudat 4 die Krümmungen bereits in seiner eigenen Formgebung verkörpern, um möglichst vollflächig, wenigstens großflächig auf der Innenwandung der Rotorblatthalbschale aufzuliegen. Daher sind die in der Fig. 1 als auch in der Fig. 3 dargestellten Auflageflächen 1 der Herstellungsform 2 des Gurtes sowohl im Querschnitt als auch im Längsschnitt gekrümmt. Die dargestellte Krümmung ist nicht maßstabsgerecht, sondern übertrieben dargestellt.

Pultrudate 4 werden üblicherweise in einem Strangziehverfahren hergestellt. Dazu werden Rovinge, das sind Kohlefaser- und/oder Glasfaserbündel, die auf Spulen bevorratet sind, neben- und übereinander abgerollt und in Längsrichtung nebeneinander durch ein Harzbad gezogen bzw. mit einem flüssigen Harz umgeben, das dann zusammen mit den Rovingen in einem Ofen erhitzt wird. Während der Erhitzung härtet das Harz aus, und es wird ein festes, schwer biegsames Pultrudat 4 gefertigt. Die erfindungsgemäßen Pultrudate sind gegenüber den herkömmlichen Pultrudaten jedoch sowohl im Querschnitt als auch im Längsschnitt leichter biegsam. Dazu wird während des Herstellungsverfahrens des Pultrudates 4 zunächst in herkömmlicher Weise davon Gebrauch gemacht, Rovinge von Spulen abzuwickeln und nebeneinander anzuordnen und mit flüssigem Harz zu ummanteln. Die Rovinge werden mit dem Harz durch einen Ofen verfahren, wobei jedoch die Verweildauer und/oder die Temperatur des Ofens gegenüber dem herkömmlichen Aushärteschritt verkürzt bzw. abgesenkt wird, sodass das entstehende Pultrudat nicht vollständig ausgehärtet ist. Dadurch, dass das vollständige Pultrudat nicht komplett ausgehärtet ist, also biegsamer und weicher ist, lässt es sich für das erfindungsgemäße Herstellungsverfahren verwenden.

Fig. 1 zeigt das nicht gebogene herkömmliche Pultrudat 4, das auf die gekrümmte Auflagefläche 1 der Herstellungsform 2 gelegt ist. Zur Herstellung eines Gurtes werden üblicherweise mehrere Pultrudate 4 nebeneinander- und übereinandergelegt. Das dabei auftretende Problem ist im Prinzip in der Fig. 1 dargestellt, nämlich, dass sich in bestimmten Bereichen, hier zwischen der Auflagefläche 1 und einer Unterseite der Pultrudate 4, ein Raum 7 ausbildet, in dem sich während eines Infusionsverfahrens Harz 8 sammelt. Nach dem Aushärtevorgang am Ende des Infusionsverfahrens entsteht zwar ein fester Gurt, der jedoch entlang des Raumes 7 viel Harz 8 aufweist, das nicht die Zugfestigkeit der Pultrudate 4 aufweist, da es über keinen Faseraufbau verfügt. Es ist daher bevorzugt vorgesehen, einen Gurt herzustellen, der möglichst wenig mit Harz 8 gefüllte Räume 7 aufweist und vorwiegend aus einem homogenen Pultrudataufbau mit in Längsrichtung verlaufenden Fasern besteht.

Erfindungsgemäß werden die nicht vollständig ausgehärteten Pultrudate 4 gemäß Fig. 2 auf die Auflagefläche 1 der Herstellungsform 2 gelegt und der trockene Aufbau des Gurtes mit einer Vakuumfolie 6 in herkömmlicher Weise überzogen. Die Vakuumfolie 6 wird an ihren Rändern abgedichtet, und es wird zwischen Vakuumfolie 6 und Auflagefläche 1 ein Vakuum erzeugt. Durch das erzeugte Vakuum drückt der umgebende Luftdruck die Pultrudate 4 gegen die Auflagefläche 1 der Herstellungsform 2. Da das Pultrudat 4 nicht vollständig ausgehärtet ist, sondern weich ist, schmiegt sich das Pultrudat 4 gemäß Fig. 2 an die Auflagefläche 1 an. Das heißt, es bildet sich über die gesamte der Auflagefläche 1 zugewandten Unterseite ein Kontakt mit der Auflagefläche aus.

Die Herstellungsform 2 kann während des Infusionsverfahrens erwärmt werden, sodass dadurch eine zusätzliche Erweichung des Pultrudates 4 möglich wird.

Nachdem das Vakuum hergestellt ist oder gleichzeitig, wird Harz 8 in den Pultrudataufbau infundiert und die Pultrudate 4 miteinander verklebt. Während einer anschließenden Erhitzung wird das Harz 8 vollständig ausgehärtet, und es entsteht ein Gurt für eine Rotorblatthalbschale, wobei die Pultrudate 4 des Gurtes der Krümmung der Auflagefläche 1 optimal angepasst sind und dennoch keine innere Spannung in den Pultrudaten 4 während des Infusionsverfahrens aufgebaut wird, da sich die weichen Pultrudate 4 mühelos, d. h. ohne großen Kraftaufwand gegen die Auflagefläche 1 krümmen lassen und keine Spannung oder Gegenkraft überwunden werden muss.

In Fig. 3 ist ein Längsschnitt der Herstellungsform in Fig. 1 und Fig. 2 gezeigt. Das Pultrudat 4 weist herkömmlicherweise auch in Längsrichtung L Abschnitte auf, die nicht vollflächig auf der Auflagefläche 1 der Herstellungsform 2 aufliegen und sich daher unter dem Pultrudat 4 die Räume 7 ausbilden, in denen sich Harz 8 sammeln kann. Um die Räume 7 zu vermeiden, werden die erfindungsgemäß nicht vollständig ausgehärteten Pultrudate 4 wie oben erwähnt verwendet, und während des Vakuuminfusionsverfahrens wird durch die Erzeugung des Vakuums das Pultrudat 4 auch im Längsschnitt vollflächig gegen die Auflagefläche 1 gesogen, sodass sich bei dem nachträglichen Harzinfusionsverfahren keine mit Harz 8 gefüllten Räume 7 ausbilden. Der laminierte Gurt ist nach dem Infusionsverfahren und seiner Aushärtung auch in Längsrichtung L homogen aus Pultrudaten 4 aufgebaut, die lediglich durch das Harz 8 miteinander verklebt sind. Günstigerweise wird der Gurt vollständig ausgehärtet und dann mit seiner im Querschnitt und im Längsschnitt ausgebildeten Krümmung unter vollflächigem Kontakt in die Rotorblatthalbschale eingelegt.

Es ist auch denkbar, dass der gesamte Gurt nicht vollständig ausgehärtet wird, also die Temperatur der Herstellungsform 2 während des Infusionsverfahrens gegenüber herkömmlichen Infusionsverfahren über kürzere Zeit und/oder auf geringerer Aushärtetemperatur gefahren wird, sodass der Gurt nach dem Infusionsverfahren nicht vollständig ausgehärtet ist, sondern weich bleibt und in analoger Weise zum obengenannten Pultrudat 4 in die Rotorblatthalbschale eingelegt werden kann und dort in einem Infusionsverfahren gegen die Auflagefläche 1 der Rotorblatthalbschalenform gesaugt wird.

### Bezugszeichenliste

- 1: Auflagefläche
- 2: Herstellungsform
- 4: Pultrudate

- 6: Vakuumfolie
- 7: Raum
- 8: Harz

- L: Längsrichtung
- Tg: Glasübergangstemperatur

## Patentansprüche

1. Herstellungsverfahren für ein Bauteil eines Rotorblattes, indem
eine Herstellungsform (2) mit gekrümmter Auflagefläche (1) zur Verfügung gestellt wird,
wenigstens ein Pultrudat (4) auf die Auflagefläche (1) gelegt wird
**dadurch gekennzeichnet, dass**
das wenigstens eine Pultrudat (4) mit einer Vakuumfolie (6) überdeckt wird und beim Auflegen auf die gekrümmte Auflagefläche nicht vollständig ausgehärtet und daher biegsam ist
und
ein Vakuum erzeugt wird und das wenigstens eine biegsame Pultrudat (4) durch das Vakuum an die gekrümmte Auflagefläche (1) der Herstellungsform (2) vollflächig angedrückt wird.

2. Herstellungsverfahren nach Anspruch 1,
**dadurch gekennzeichnet, dass**, wenn das wenigstens eine biegsame Pultrudat (4) zunächst in einem Querschnitt gerade ausgebildet ist und während es durch die Ausbildung des Vakuums an die gekrümmte Auflagefläche (1) angedrückt wird, es ständig auf einer Temperatur unterhalb der Glasübergangstemperatur (Tg) gehalten wird.

3. Herstellungsverfahren nach Anspruch 1 oder 2,
**dadurch gekennzeichnet, dass** das Bauteil mit Harz (8) infundiert wird und das Harz (8) und das wenigstens eine Pultrudat (4) ausgehärtet werden.

4. Herstellungsverfahren nach Anspruch 1, 2 oder 3,
**dadurch gekennzeichnet, dass** das wenigstens eine Pultrudat (4) entlang eines Querschnitts und entlang eines Längsschnitts gekrümmt wird.

5. Herstellungsverfahren nach einem der Ansprüche 1 bis 4,
**dadurch gekennzeichnet, dass** das wenigstens eine Pultrudat (4) auf eine Temperatur unterhalb einer Glasübergangstemperatur (Tg) erwärmt wird und bei der Temperatur an die gekrümmte Auflagefläche (1) gedrückt wird.

6. Herstellungsverfahren nach einem der Ansprüche 1 bis 5,
**dadurch gekennzeichnet, dass** zwei bis fünf Pultrudate (4) nebeneinander und bis zu zehn Pultrudate (4) übereinander auf die gekrümmte Auflagefläche (1) gelegt werden und ein Infusionsverfahren durchgeführt wird und ein Gurt hergestellt wird

7. Anordnung zur Herstellung eines Bauteils eines Rotorblattes mit einer Herstellungsform (2) mit einer gekrümmten Auflagefläche (1) **gekennzeichnet durch** wenigstens ein vollflächig auf der Auflagefläche (1) liegendes biegsames Pultrudat (4), das nicht vollständig ausgehärtet ist und eine Glasübergangstemperatur (Tg) aufweist und sich auf einer Temperatur unterhalb der Glasübergangstemperatur (Tg) befindet.

8. Anordnung nach Anspruch 7,
**dadurch gekennzeichnet, dass** eine Vakuumfolie (6) über das wenigstens eine nicht ausgehärtete Pultrudat (4) gelegt ist.

## Claims

1. Method for producing a component of a rotor blade, wherein a production mould (2) with a curved support surface (1) is provided, at least one pultrudate (4) is laid onto the support surface (1), **characterized in that** the at least one pultrudate (4) is covered with a vacuum film (6) and is not completely cured as it is laid onto the curved surface, therefore being flexible, and a vacuum is generated and the at least one flexible pultrudate (4) is pressed entirely onto the curved support surface (1) of the production mould (2) by the vacuum.

2. Production method according to claim 1, **characterised in that** if the at least one flexible pultrudate (4) is first of all formed in a cross-section and while it is pressed by the formation of the vacuum onto the curved support surface (1), it is kept continuously at a temperature below the glass transition temperature (Tg).

3. Production method according to claim 1 or 2, **characterised in that** the component is infused with resin (8) and the resin (8) and the at least one pultrudate (4) are cured.

4. Production method according to claim 1, 2 or 3, **characterised in that** the at least one pultrudate (4) is curved along a cross-section and along a longitudinal section.

5. Production method according to any of claims 1 to 4, **characterised in that** the at least one pultrudate (4) is heated to a temperature below a glass transition temperature (Tg) and at that temperature is pressed onto the curved support surface (1).

6. Production method according to any of claims 1 to 5, **characterised in that** two to five pultrudates (4) are laid alongside one another and up to ten pultrudates (4) are laid one above the other on the curved support surface (1) and an infusion process is carried out and a chord is produced.

7. Arrangement for producing a component of a rotor blade with a production mould (2) having a curved support surface (1), **characterized in that** at least one flexible pultrudate (4), which lies entirely on the support surface (1) and which is not completely cured and has a glass transition temperature (Tg) and is at a temperature below the glass transition temperature (Tg).

8. Arrangement according to claim 7, **characterised in that** a vacuum film (6) is laid over the at least one uncured pultrudate (4).

## Revendications

1. Procédé de fabrication d'un composant d'une pale de rotor, dans lequel
un moule de fabrication (2) avec une surface d'appui incurvée (1) est mis à disposition,
au moins un produit pultrudé (4) est placé sur la surface d'appui (1),
**caractérisé en ce que**
l'au moins un produit pultrudé (4) est recouvert d'une feuille sous vide (6)
et, lors de la pose sur la surface d'appui incurvée, n'est pas complètement durci et est donc flexible
et un vide est produit et l'au moins un produit pultrudé flexible (4) est pressé par le vide sur toute sa surface contre la surface d'appui incurvée (1) du moule de fabrication (2).

2. Procédé de fabrication selon la revendication 1, **caractérisé en ce que**, lorsque l'au moins un produit pultrudé flexible (4) est d'abord formé droit dans une section transversale et pendant qu'il est pressé contre la surface d'appui incurvée (1) par la production du vide, il est maintenu en permanence à une température inférieure à la température de transition vitreuse (Tg).

3. Procédé de fabrication selon la revendication 1 ou 2, **caractérisé en ce que** le composant est infusé avec de la résine (8) et la résine (8) et l'au moins un produit pultrudé (4) sont durcis.

4. Procédé de fabrication selon la revendication 1, 2 ou 3, **caractérisé en ce que** l'au moins un produit pultrudé (4) est incurvé le long d'une section transversale et le long d'une section longitudinale.

5. Procédé de fabrication selon l'une quelconque des revendications 1 à 4, **caractérisé en ce que** l'au moins un produit pultrudé (4) est chauffé à une température inférieure à une température de transition vitreuse (Tg) et est pressé à cette température contre la surface d'appui incurvée (1).

6. Procédé de fabrication selon l'une quelconque des revendications 1 à 5, **caractérisé en ce que** deux à cinq produits pultrudés (4) sont placés côte à côte et jusqu'à dix produits pultrudés (4) sont placés les uns au-dessus des autres sur la surface d'appui incurvée (1) et un procédé d'infusion est effectué et une courroie est fabriquée.

7. Agencement pour la fabrication d'un composant d'une pale de rotor avec un moule de fabrication (2) avec une surface d'appui incurvée (1), **caractérisé par** au moins un produit pultrudé flexible (4) reposant sur toute sa surface sur la surface d'appui (1), qui n'est pas entièrement durci et qui présente une température de transition vitreuse (Tg) et se trouve à une température inférieure à la température de transition vitreuse (Tg).

8. Agencement selon la revendication 7, **caractérisé en ce qu'**une feuille sous vide (6) est placée sur l'au moins un produit pultrudé non durci (4).
